# EUROPEAN PATENT APPLICATION

(11) **EP 4 593 232 A1**
(43) Date of publication of application: **30.07.2025**
(21) Application number: 23882940.2
(22) Date of filing: 04.10.2023
(51) Int. Cl.: H02J 7/00, H01M 10/44

(54) **ELECTRONIC DEVICE AND METHOD FOR CONTROLLING CHARGING CURRENT FOR PLURALITY OF BATTERIES**

(30) Priority: 24.10.2022 KR 20220137803; 11.11.2022 KR 20220150660
(71) Applicant: Samsung Electronics Co., Ltd., Suwon-si, Gyeonggi-do 16677 (KR)
(72) Inventor: KIM, Hyunwoo, Suwon-si, Gyeonggi-do 16677 (KR); LEE, Taelee, Suwon-si, Gyeonggi-do 16677 (KR)
(74) Representative: Nederlandsch Octrooibureau
(86) International application number: PCT/KR2023/015268
(87) International publication number: WO 2024/090833

(57) **Abstract**

According to an embodiment, an electronic device comprises at least one processor, a first battery, and a second battery, wherein the at least one processor is configured to: identify a first voltage of the first battery and a second voltage of the second battery; identify a first charging current value corresponding to a charging state of the first battery on the basis of the first voltage of the first battery; identify a second charging current value corresponding to a charging state of the second battery on the basis of the second voltage of the second battery; identify a total charging current value and a distribution ratio on the basis of the first charging current value and the second charging current value; set a first charging path for the first battery and a second charging path for the second battery so as to have the distribution ratio; provide a first charging current according to the first charging current value to the first battery through the first charging path; and provide a second charging current according to the second charging current value to the second battery through the second charging path.

## Description

### [Technical Field]

Various embodiments relate to an electronic device and a method for controlling a charging current for a plurality of batteries.

### [Background Art]

An electronic device may have a plurality of batteries. The plurality of batteries may have a guaranteed current value in accordance with a voltage to prevent a battery explosion and a degradation in battery life. The electronic device may control a charging current based on the guaranteed current value.

The above-described information may be provided as a related art for the purpose of helping understanding of the present disclosure. No argument or decision is made as to whether any of the above description may be applied as a prior art related to the present disclosure.

### [Disclosure]

### [Technical Solution]

In embodiments, an electronic device is provided. The electronic device may comprise at least one processor, a first battery, and a second battery. The at least one processor may be configured to identify a first voltage of the first battery and a second voltage of the second battery. The at least one processor may be configured to identify a first charging current value corresponding to a charging state of the first battery based on the first voltage of the first battery. The at least one processor may be configured to identify a second charging current value corresponding to a charging state of the second battery based on the second voltage of the second battery. The at least one processor may be configured to identify a total charging current value and a distribution ratio based on the first charging current value and the second charging current value. The at least one processor may be configured to set a first charging path for the first battery and a second charging path for the second battery to have the distribution ratio. The at least one processor may be configured to provide a first charging current in accordance with the first charging current value to the first battery through the first charging path. The at least one processor may be configured to provide a second charging current in accordance with the second charging current value to the second battery through the second charging path.

In embodiments, a method performed by an electronic device is provided. The method may comprise identifying a first voltage of the first battery and a second voltage of the second battery. The method may comprise identifying a first charging current value corresponding to a charging state of the first battery based on the first voltage of the first battery. The method may comprise identifying a second charging current value corresponding to a charging state of the second battery based on the second voltage of the second battery. The method may comprise identifying a total charging current value and a distribution ratio based on the first charging current value and the second charging current value. The method may comprise setting a first charging path for the first battery and a second charging path for the second battery to have the distribution ratio. The method may comprise providing a first charging current in accordance with the first charging current value to the first battery through the first charging path. The method may comprise providing a second charging current in accordance with the second charging current value to the second battery through the second charging path.

In embodiments, a non-transitory computer readable storage medium is provided. The non-transitory computer readable storage medium may comprise memory storing instructions. The instructions, when executed by a processor, may cause an electronic device to identify a first voltage of a first battery and a second voltage of a second battery, identify a first charging current value corresponding to a charging state of the first battery based on the first voltage of the first battery, identify a second charging current value corresponding to a charging state of the second battery based on the second voltage of the second battery, identify a total charging current value and a distribution ratio based on the first charging current value and the second charging current value, set a first charging path for the first battery and a second charging path for the second battery to have the distribution ratio, provide a first charging current in accordance with the first charging current value to the first battery through the first charging path, and provide a second charging current in accordance with the second charging current value to the second battery through the second charging path.

### [Description of the Drawings]

FIG. 1 is a block diagram of an electronic device in a network environment.
FIG. 2 illustrates an example of a cross-section of an electronic device.
FIG. 3 illustrates an example of a circuitry disposition of an electronic device.
FIG. 4 illustrates an example of a charging current value with respect to a charging time.
FIG. 5 illustrates an example of a distribution ratio in accordance with voltages of a plurality of batteries.
FIG. 6 illustrates a flow of an operation of an electronic device for charging a plurality of batteries based on a distribution ratio.
FIG. 7 illustrates a flow of an operation of an electronic device for identifying a distribution ratio.
FIG. 8 illustrates a power charging time reduction effect.
FIG. 9 illustrates a voltage and a current of a plurality of batteries with respect to a charging time.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to range (range, section, boundary), terms referring to a specified value (reference value, threshold value, and specified value), and the like, used in the following description are exemplified for convenience of explanation. Therefore, the present disclosure is not limited to terms to be described below, and another term having an equivalent technical meaning may be used. In addition, a term such as '...unit, '...device, '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' refer to including at least one of 'C' or 'D', that is, {'C', 'D', and 'C' and 'D'}.

Prior to describing embodiments of the present disclosure, terms necessary to describe operations of an electronic device according to embodiments are defined. A charging current may mean a current for charging a battery. A charging current value may mean a value identified for setting the charging current.

Hereinafter, various embodiments disclosed in the present document will be described with reference to the accompanying drawings. For convenience of description, components illustrated in the drawings may be exaggerated or reduced in size, and the present invention is not necessarily limited to what is illustrated.

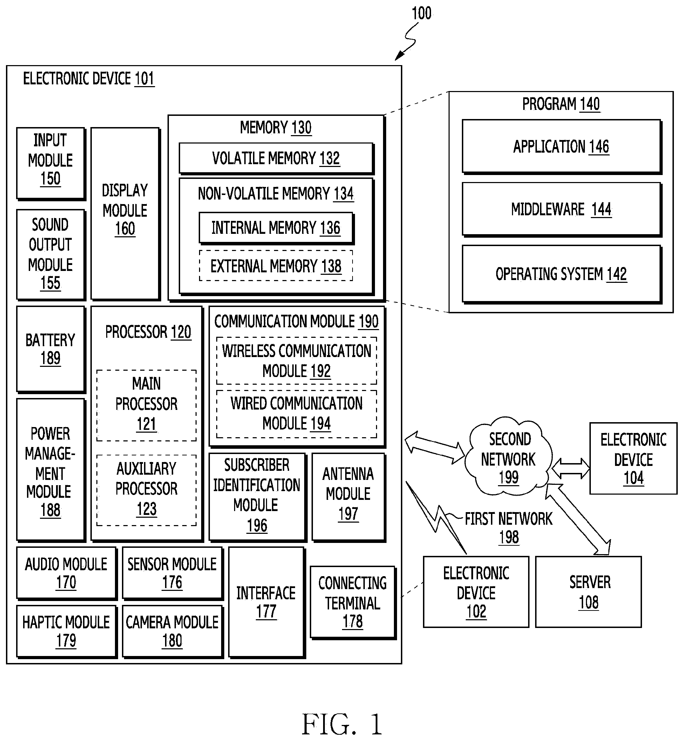

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

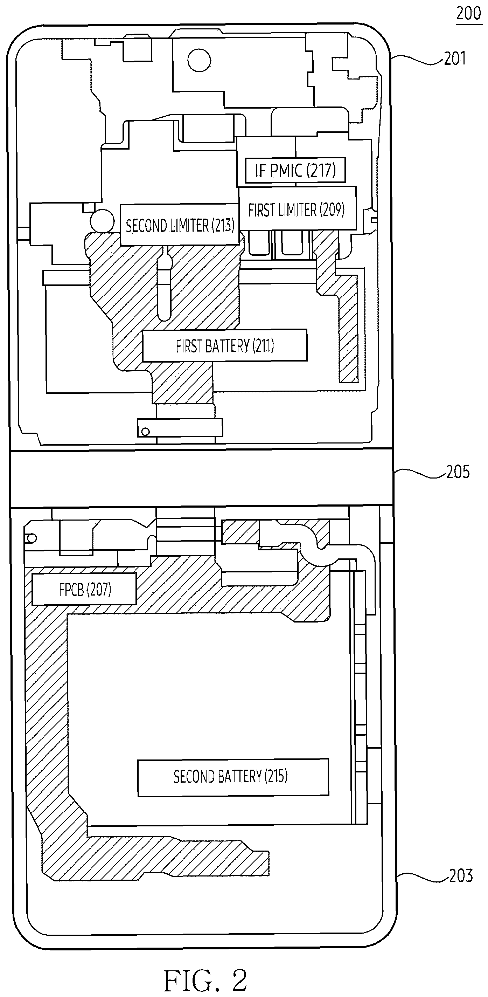

FIG. 2 illustrates an example of a cross-section of an electronic device. The electronic device including a plurality of batteries may be a foldable electronic device.

Referring to FIG. 2, a cross-sectional view 200 illustrates an example of a cross-section of the electronic device according to embodiments. A first housing 201 may be connected to a second housing 203 through a hinge structure 205. The electronic device (e.g., the electronic device 101 of FIG. 1) may be the foldable electronic device, which includes the first housing 201 and the second housing 203, and in which the plurality of housings 201 and 203 are connected through the hinge structure 205. However, it is not limited thereto. The electronic device 101 may be an electronic device including various form factors. For example, the electronic device 101 may be a rollable electronic device in which the second housing slides with respect to the first housing. A first limiter 209 may be connected to an IF PMIC 217 through a flexible printed circuit board (FPCB) 207. The first limiter 209 may be connected to a first battery 211 through the flexible printed circuit board (FPCB) 207. A second limiter 213 may be connected to a second battery 215 through the FPCB 207.

According to an embodiment, the electronic device 101 may provide various states. For example, the electronic device 101 may provide a folded state through the hinge structure 205. In the folded state, a surface of the first housing 201 and a surface of the second housing 203 may face each other. For example, an unfolded state may be provided through the hinge structure 205 of the electronic device 101. In the unfolded state, the surface of the first housing 201 and the surface of the second housing 203 may form an angle in a designated range (e.g., greater than 0 degrees and less than 180 degrees).

According to an embodiment, the foldable electronic device may include the first battery 211 in the first housing 201. The first battery 211 may be disposed in an area of the first housing 201. The foldable electronic device may include an application processor (AP) and the IF PMIC 217 in the first housing 201. The electronic device may include the first limiter 209 and the second limiter 213 in the first housing 201. The first limiter 209 may be disposed in the area of the first housing 201. The second limiter 213 may be disposed in the area of the first housing 201. The foldable electronic device may include the second battery 215 in the second housing 203. The second battery 215 may be disposed in an area of the second housing 203.

FIG. 2 illustrates the electronic device 101 including the plurality of batteries as the foldable electronic device, but embodiments of the present disclosure are not limited thereto. According to an embodiment, the electronic device 101 including the plurality of batteries may not include a hinge structure. For example, the electronic device 101 including the plurality of batteries may be a bar-type electronic device. For example, the electronic device 101 including the plurality of batteries may be the rollable electronic device.

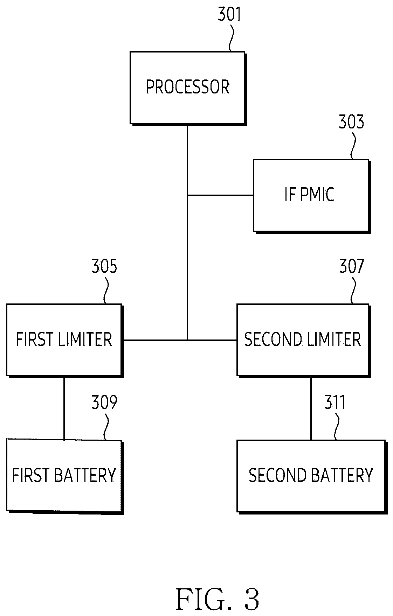

FIG. 3 illustrates an example of a circuitry disposition of an electronic device.

Referring to FIG. 3, an example of circuitry 300 of the electronic device (e.g., the electronic device 101 of FIG. 1) including a limiter and a battery of the electronic device, according to embodiments is illustrated. A processor 301 may control an interface power management integrated circuit (IF PMIC) 303. The processor 301 may be an application processor (AP). The processor 301 may be used to charge the battery in a first charging scheme (e.g., a constant current (CC) charging mode). The IF PMIC 303 may be used to charge the battery in a second charging scheme (e.g., a constant voltage (CV) charging mode). The first limiter 305 may be an active element for measuring a voltage of a first battery 309. The second limiter 307 may be an active element for measuring a voltage of a second battery 311. The electronic device 101 may include a plurality of batteries (e.g., the battery 189 of FIG. 1). The plurality of batteries 189 may include the first battery 309 and the second battery 311. In FIG. 3, a solid line connecting each element may mean an electrical connection of a conductive line for supplying a current or a flexible printed circuit board (FPCB) (e.g., the FPCB 207 of FIG. 2). For example, the solid line may be a power line supplying the current. The first battery 309 may be positioned in a first housing area of the electronic device 101. The second battery 311 may be positioned in a second housing area of the electronic device 101.

According to an embodiment, as a charging time of the first battery 309 increases, a charging amount of the first battery 309 may increase. As the charging amount of the first battery 309 increases, a charging current of the first battery 309 may be reduced. As a charging time of the second battery 311 increases, a charging amount of the second battery 311 may increase. As the charging amount of the second battery 311 increases, a charging current of the second battery 311 may be reduced.

According to an embodiment, the processor 301 may charge the battery in accordance with a charging mode of one of the first charging scheme and the second charging scheme. The first charging scheme may be referred to as a constant current (CC) mode. The second charging scheme may be referred to as a constant voltage (CV) mode. In the first charging scheme, the battery (e.g., the first battery 309 or the second battery 311) may be charged with a constant current. As the battery 309 or 311 is charged with the constant current, a voltage of the battery 309 or 311 may increase. If the voltage of the battery 309 or 311 approaches a reference value, the processor 301 may charge the battery in the second charging scheme to reduce noise. In the second charging scheme, the battery 309 or 311 may be charged with a constant voltage. As the battery 309 or 311 is charged with the constant voltage, a current of the battery 309 or 311 may be reduced.

According to an embodiment, the processor 301 may identify a first charging current value based on a guaranteed current of the first battery 309. The processor 301 may identify a second charging current value based on a guaranteed current of the second battery 311. The guaranteed current is an intensity of a current recommended to maximize a life of the battery. In the first charging scheme (the constant current (CC) mode), the first charging current value may be determined based on a first voltage of the first battery 309. For example, in a case that the first voltage is within a first range, the processor 301 may set the first charging current value to a first designated value. In a case that the first voltage is within a second range, the first charging current value may be set as a second designated value. In a case that the first voltage is within a third range, the first charging current value may be set to a fifth designated value. A maximum value of the first range may be less than a minimum value of the second range. A maximum value of the second range may be less than a minimum value of the third range. The first designated value may be greater than the second designated value. The second designated value may be greater than the fifth designated value. The first range may be less than 4.16 V. The first designated value may be approximately 1000 mA. The second range may be 4.16 V or more and less than 4.28 V. The second designated value may be approximately 800 mA. The third range may be greater than or equal to 4.28 V and less than 4.47 V. The fifth designated value may be approximately 600 mA. In the first charging scheme (the constant current (CC) mode), the second charging current value may be determined based on a second voltage of the second battery 311. For example, in a case that the second voltage is within the first range, the processor 301 may set the second charging current value to a third designated value. In a case that the second voltage is within the second range, the second charging current value may be set to a fourth designated value. In a case that the second voltage is within the third range, the second charging current value may be set to a sixth designated value. The first range may be less than 4.16 V. The third designated value may be approximately 2000 mA. The second range may be 4.16 V or more and less than 4.28 V. The fourth designated value may be approximately 1600 mA. The third range may be greater than or equal to 4.28 V and less than 4.47 V. The sixth designated value may be approximately 1200 mA. According to an embodiment, in a case that both the first voltage and the second voltage are within the same range (e.g., the first range, the second range, or the third range), the distribution ratio may be controlled to be similar to or equal to a ratio between a capacity of the first battery 309 and a capacity of the second battery 311, such that a degree of charge of the first battery 309 and the second battery 311 having different capacities may be similarly adjusted. According to an embodiment, in the first range, even if the distribution ratio is the ratio between the capacity of the first battery 309 and the capacity of the second battery 311, a degree of charge of the first battery 309 and a degree of charge of the second battery 311 may be different. This is because resistance of a conductive line from a charger (e.g., the electronic device 102 of FIG. 1) to the first battery 309 and resistance of a conductive line from the charger to the second battery 311 may be different. This is because power consumption of the conductive line from a charger 102 to the first battery 309 and power consumption of the conductive line from the charger to the second battery 311 may be different. The charger 102 may be an external device that supplies power for charging. The charger 102 may be an external device connected to the electronic device 101 through a connecting terminal (e.g., the connecting terminal 178 of FIG. 1).

According to an embodiment, the first voltage of the first battery 309 may be identified via the first limiter 305 for the first battery 309. The processor 301 may identify a first charging current for charging the first battery 309 and a voltage applied to the first battery 309 via the first limiter 305 through a pack sensing scheme. The second voltage of the second battery 311 may be identified via the second limiter 307 for the second battery 311. The processor 301 may identify a second charging current for charging the second battery 311 and a voltage applied to the second battery 311 via the second limiter 307 through the pack sensing scheme.

According to an embodiment, the processor 301 may identify a total charging current value and a distribution ratio based on the identified first charging current value and the identified second charging current value. The total charging current value may be divided into the first charging current and the second charging current based on the distribution ratio. The distribution ratio may be the identified second charging current value with respect to the identified first charging current value. For example, when the identified first charging current value is approximately 1000 mA and the identified second charging current value is approximately 2000 mA, the total charging current value may be approximately 3000 mA. When the identified first charging current value is approximately 1000 mA and the identified second charging current value is approximately 2000 mA, the distribution ratio may be 1:2. For example, when the identified first charging current value is approximately 1000 mA and the identified second charging current value is approximately 1600 mA, the total charging current value may be approximately 2600 mA. When the identified first charging current value is approximately 1000 mA and the identified second charging current value is approximately 1600 mA, the distribution ratio may be 5:8.

According to an embodiment, the processor 301 may generate a control signal for setting the total charging current value for charging the first battery 309 and the second battery 311 to a sum of the first charging current value and the second charging current value. The processor 301 may transmit the control signal to the charger. For example, when the identified first charging current value is approximately 1000 mA and the identified second charging current value is approximately 2000 mA, the processor 301 may generate a control signal for setting the total charging current value to approximately 3000 mA. The processor 301 may transmit the control signal to the charger 102. For another example, when the identified first charging current value is approximately 1000 mA and the identified second charging current value is approximately 1600 mA, the processor 301 may generate a control signal for setting the total charging current value to approximately 2600 mA. The processor 301 may transmit the control signal to the charger 102.

According to an embodiment, the processor 301 may set a first charging path for the first battery and a second charging path for the second battery to have the identified distribution ratio. The first charging path may include the first limiter 305. The first charging path may be a path in which the distribution ratio of the total charging current value is adjusted. The second charging path may include the second limiter 307. The second charging path may be a path in which the distribution ratio of the total charging current value is adjusted. The processor 301 may control a current flowing through the first limiter 305 to be the identified first charging current value. The processor 301 may control a current flowing through the second limiter 307 to be the identified second charging current value.

According to an embodiment, the processor 301 may provide the first charging current in accordance with the identified first charging current value to the first battery 309 through the first charging path. The processor 301 may provide the second charging current in accordance with the identified second charging current value to the second battery 311 through the second charging path.

According to an embodiment, when the first voltage or the second voltage approaches a reference value, the processor 301 may change the charging scheme from the first charging scheme to the second charging scheme. For example, the first charging scheme may be referred to as the constant current (CC) mode. In the first charging scheme, the battery (the first battery 309 or the second battery 311) may be charged with the constant current. The second charging scheme may be referred to as the constant voltage (CV) mode. In the second charging scheme, the battery (the first battery 309 or the second battery 311) may be charged with the constant voltage. The processor 301 may perform charging with a first power in the first charging scheme. The IF PMIC 303 may perform charging with a second power in the second charging scheme. The first power may be greater than the second power. For example, the first power may be approximately 25 W. The second power may be approximately 15 W. In the second charging scheme, the IF PMIC 303 may reduce the first charging current for charging the first battery in order to maintain the first voltage as the reference value in the second charging scheme. The IF PMIC 303 may reduce the second charging current for charging the second battery in order to maintain the second voltage as the reference value in the second charging scheme.

FIG. 3 illustrates that the electronic device 101 has two batteries 309 and 311, but embodiments of the present disclosure are not limited thereto. According to an embodiment, the electronic device 101 may further include a third battery and a third limiter in addition to the first battery 309, the first limiter 305, the second battery 311, and the second limiter 307. According to another embodiment, the electronic device 101 may further include a plurality of batteries and a plurality of limiters in addition to the first battery 309, the first limiter 305, the second battery 311, and the second limiter 307.

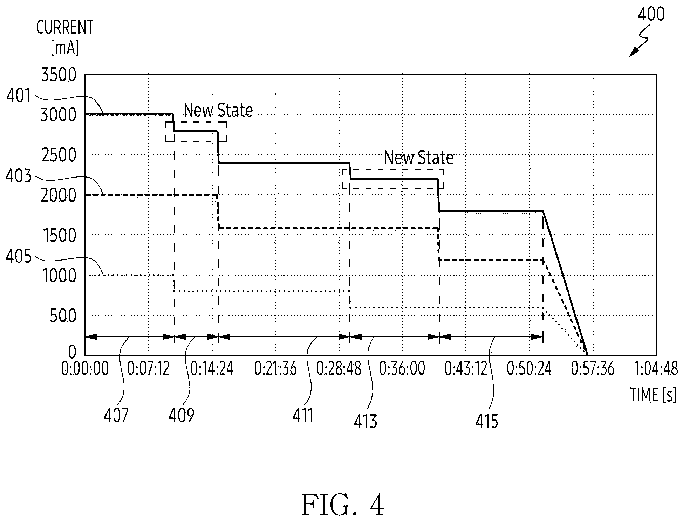

FIG. 4 illustrates an example of a charging current value with respect to a charging time.

Referring to FIG. 4, a graph 400 may indicate an intensity of a charging current that is reduced in accordance with a charging time. An x-axis may be a charging time. An unit of the x-axis may be a second. A y-axis may be a charging current. An unit of the y-axis may be mill-ampere (mA). A first line 401 may be an intensity of a total charging current value identified based on a first voltage of a first battery (e.g., the first battery 309 of FIG. 3) and a second voltage of a second battery (e.g., the second battery 311 of FIG. 3). A second line 403 may be an intensity of a second charging current identified based on the second voltage of the second battery 311. A third line 405 may be an intensity of a first charging current identified based on the first voltage of the first battery 309. In a first section 407, the first voltage and the second voltage may belong in a first range. In a second section 409, the first voltage may belong in a second range, and the second voltage may belong in the first range. In a third section 411, the first voltage and the second voltage may belong in the second range. In a fourth section 413, the first voltage may belong in a third range, and the second voltage may belong in the second range. In a fifth section 415, the first voltage and the second voltage may belong in the third range. A maximum value of the first range may be less than a minimum value of the second range. A maximum value of the second range may be less than a minimum value of the third range.

According to an embodiment, in the first section 407, the at least one processor 120 may identify a first charging current value based on the first voltage in the first range. The at least one processor 120 may identify a second charging current value based on the second voltage in the first range. For example, the at least one processor 120 may identify the first charging current value, which is approximately 1000 mA, based on the first voltage less than 4.16 V. The at least one processor 120 may charge the first battery 309 with the first charging current based on the identified first charging current value, which is approximately 1000 mA. For example, the at least one processor 120 may identify the second charging current value, which is approximately 2000 mA, based on the second voltage less than 4.16 V. The at least one processor 120 may charge the second battery 311 with the second charging current based on the identified second charging current value, which is approximately 2000 mA. In the first section 407, the at least one processor 120 may identify a total charging current value and a distribution ratio based on the identified first charging current value and the identified second charging current value. For example, in the first section 407, the total charging current value may be approximately 3000 mA. In the first section 407, the distribution ratio may be 1:2. The distribution ratio may be controlled to be similar to or equal to a capacity of the first battery 309 and a capacity of the second battery 311, such that a degree of charge of the first battery 309 and the second battery 311 having different capacities may be similarly adjusted. The at least one processor 120 may generate a control signal for setting the total charging current value to a sum of the first charging current value and the second charging current value. The at least one processor 120 may transmit the control signal to a charger (e.g., the electronic device 102 of FIG. 1). For example, the at least one processor 120 may generate a control signal for setting the total charging current value to approximately 3000 mA. The at least one processor 120 may transmit the control signal to the charger 102. According to an embodiment, the at least one processor 120 may set a first charging path for the first battery 309 and a second charging path for the second battery 311 to have the identified distribution ratio. For example, the at least one processor 120 may set the first charging path for the first battery 309 and the second charging path for the second battery 311 to have the 1:2 distribution ratio. The charger 102 may be an external device supplying power for charging. The charger 102 may be an external device connected to the electronic device 101 through a connecting terminal (e.g., the connecting terminal 178 of FIG. 1).

According to an embodiment, the first voltage of the first battery 309 may be different from the second voltage of the second battery 311. In other words, in the first section 407, even if the distribution ratio is a ratio between the capacity of the first battery 309 and the capacity of the second battery 311, a degree of charge of the first battery 309 and a degree of charge of the second battery 311 may be different. Therefore, the first voltage and the second voltage of the second section 409 may be differently identified. This is because resistance of a conductive line from the charger 102 to the first battery 309 and resistance of a conductive line from the charger 102 to the second battery 311 may be different. This is because power consumption of the conductive line from the charger 102 to the first battery 309 and power consumption of the conductive line from the charger 102 to the second battery 311 may be different.

According to an embodiment, in the second section 409, the at least one processor 120 may identify the first charging current value based on the first voltage in the second range. The at least one processor 120 may identify the second charging current value based on the second voltage in the first range. For example, the at least one processor 120 may identify the first charging current value, which is approximately 800 mA, based on the first voltage of 4.16 V or more and less than 4.28 V. The at least one processor 120 may charge the first battery 309 with a first charging current based on the identified first charging current value, which is approximately 800 mA. For example, the at least one processor 120 may identify the second charging current value, which is approximately 2000 mA, based on the second voltage less than 4.16 V. The at least one processor 120 may charge the second battery 311 with the second charging current based on the identified second charging current value, which is approximately 2000 mA. In the second section 409, the at least one processor 120 may identify the total charging current value and the distribution ratio based on the identified first charging current value and the identified second charging current value. For example, in the second section 409, the total charging current value may be approximately 2800 mA. In the second section 409, the distribution ratio may be 2:5. The at least one processor 120 may generate the control signal for setting the total charging current value to the sum of the first charging current value and the second charging current value. The at least one processor 120 may transmit the control signal to the charger 102. For example, the at least one processor 120 may generate a control signal for setting the total charging current value to approximately 2800 mA. The at least one processor 120 may transmit the control signal to the charger 102. According to an embodiment, the at least one processor 120 may set the first charging path for the first battery 309 and the second charging path for the second battery 311 to have the identified distribution ratio. For example, the at least one processor 120 may set the first charging path for the first battery 309 and the second charging path for the second battery 311 to have the 2:5 distribution ratio.

According to an embodiment, in the third section 411, the at least one processor 120 may identify the first charging current value based on the first voltage in the second range. The at least one processor 120 may identify the second charging current value based on the second voltage in the second range. For example, the at least one processor 120 may identify the first charging current value, which is approximately 800 mA, based on the first voltage of 4.16 V or more and less than 4.28 V. The at least one processor 120 may charge the first battery 309 with the first charging current based on the identified first charging current value, which is approximately 800 mA. For example, the at least one processor 120 may identify the second charging current value, which is approximately 1600 mA, based on the second voltage of 4.16 V or more and less than 4. 28 V. The at least one processor 120 may charge the second battery 311 with the second charging current based on the identified second charging current value, which is approximately 1600 mA. In the third section 411, the at least one processor 120 may identify the total charging current value and the distribution ratio based on the identified first charging current value and the identified second charging current value. For example, in the third section 411, the total charging current value may be approximately 2400 mA. In the third section 411, the distribution ratio may be 1:2. The distribution ratio may be controlled to be similar to or equal to the ratio between the capacity of the first battery 309 and the capacity of the second battery 311, such that the degree of charge of the first battery 309 and the second battery 311 having different capacities may be similarly adjusted. The at least one processor 120 may generate the control signal for setting the total charging current value to the sum of the first charging current value and the second charging current value. The at least one processor 120 may transmit the control signal to the charger 102. For example, the at least one processor 120 may generate a control signal for setting the total charging current value to approximately 2400 mA. The at least one processor 120 may transmit the control signal to the charger 102. According to an embodiment, the at least one processor 120 may set the first charging path for the first battery 309 and the second charging path for the second battery 311 to have the identified distribution ratio. For example, the at least one processor 120 may set the first charging path for the first battery 309 and the second charging path for the second battery 311 to have the 1:2 distribution ratio.

According to an embodiment, the first voltage of the first battery 309 may be different from the second voltage of the second battery 311. In other words, in the third section 411, even if the distribution ratio is the ratio between the capacity of the first battery 309 and the capacity of the second battery 311, the degree of charge of the first battery 309 and the degree of charge of the second battery 311 may be different. Therefore, the first voltage and the second voltage of the fourth section 413 may be differently identified. This is because resistance of a conductive line from the charger 102 to the first battery 309 and resistance of a conductive line from the charger 102 to the second battery 311 may be different. This is because power consumption of the conductive line from the charger 102 to the first battery 309 and power consumption of the conductive line from the charger 102 to the second battery 311 may be different.

According to an embodiment, in the fourth section 413, the at least one processor 120 may identify the first charging current value based on the first voltage in the third range. The at least one processor 120 may identify the second charging current value based on the second voltage in the second range. For example, the at least one processor 120 may identify the first charging current value, which is approximately 600 mA, based on the first voltage of 4.28 V or more and less than 4.47 V. The at least one processor 120 may charge the first battery 309 with the first charging current based on the identified first charging current value, which is approximately 600 mA. For example, the at least one processor 120 may identify the second charging current value, which is approximately 1600 mA, based on the second voltage of 4.16 V or more and less than 4.28 V. The at least one processor 120 may charge the second battery 311 with the second charging current based on the identified second charging current value, which is approximately 1600 mA. In the fourth section 413, the at least one processor 120 may identify the total charging current value and the distribution ratio based on the identified first charging current value and the identified second charging current value. For example, in the fourth section 413, the total charging current value may be approximately 2200 mA. In the fourth section 413, the distribution ratio may be 3:8. The at least one processor 120 may generate the control signal for setting the total charging current value to the sum of the first charging current value and the second charging current value. The at least one processor 120 may transmit the control signal to the charger 102. For example, the at least one processor 120 may generate a control signal for setting the total charging current value to approximately 2200 mA. The at least one processor 120 may transmit the control signal to the charger 102. According to an embodiment, the at least one processor 120 may set the first charging path for the first battery 309 and the second charging path for the second battery 311 to have the identified distribution ratio. For example, the at least one processor 120 may set the first charging path for the first battery 309 and the second charging path for the second battery 311 to have the distribution ratio of 3:8.

According to an embodiment, in the fifth section 415, the at least one processor 120 may identify the first charging current value based on the first voltage in the third range. The at least one processor 120 may identify the second charging current value based on the second voltage in the third range. For example, the at least one processor 120 may identify the first charging current value, which is approximately 600 mA, based on the first voltage of 4.28 V or more and less than 4.47 V. The at least one processor 120 may charge the first battery 309 with the first charging current based on the identified first charging current value, which is approximately 600 mA. For example, the at least one processor 120 may identify the second charging current value, which is approximately 1200 mA, based on the second voltage of 4.28 V or more and less than 4.47 V. The at least one processor 120 may charge the second battery 311 with the second charging current based on the identified second charging current value, which is approximately 1200 mA. In the fifth section 415, the at least one processor 120 may identify the total charging current value and the distribution ratio based on the identified first charging current value and the identified second charging current value. For example, in the fifth section 415, the total charging current value may be approximately 1800 mA. In the fifth section 415, the distribution ratio may be 1:2. The distribution ratio may be controlled to be similar to or equal to the ratio between the capacity of the first battery 309 and the capacity of the second battery 311, such that the degree of charge of the first battery 309 and the second battery 311 having different capacities may be similarly adjusted. The at least one processor 120 may generate the control signal for setting the total charging current value to the sum of the first charging current value and the second charging current value. The at least one processor 120 may transmit the control signal to the charger 102. For example, the at least one processor 120 may generate a control signal for setting the total charging current value to approximately 1800 mA. The at least one processor 120 may transmit the control signal to the charger 102. According to an embodiment, the at least one processor 120 may set the first charging path for the first battery 309 and the second charging path for the second battery 311 to have the identified distribution ratio. For example, the at least one processor 120 may set the first charging path for the first battery 309 and the second charging path for the second battery 311 to have the 1:2 distribution ratio.

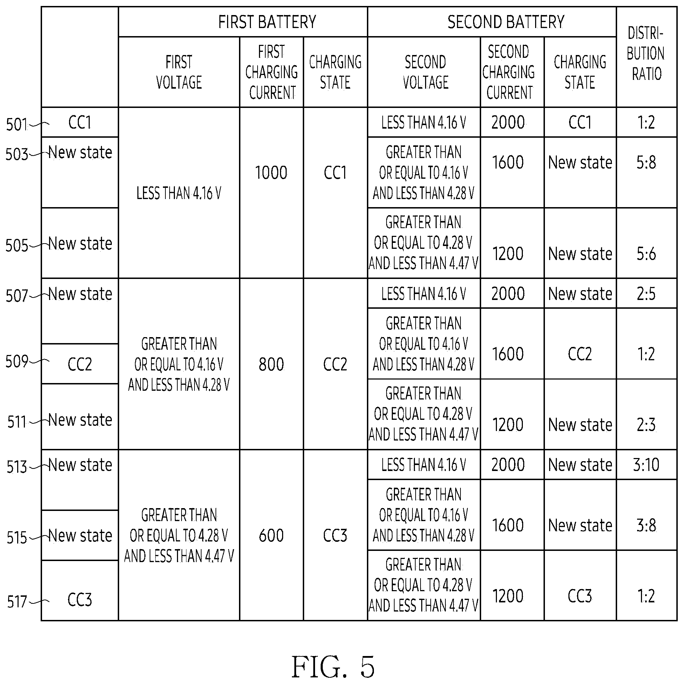

FIG. 5 illustrates an example of a distribution ratio in accordance with voltages of a plurality of batteries.

Referring to FIG. 5, in a first state 501, a first voltage of the first battery (e.g., the first battery 309 of FIG. 3) may be within a first range of 0 V or more and less than 4.16 V. The at least one processor 120 may identify a value of a first charging current based on the first voltage of the first battery 309. The value of the first charging current corresponding to the first range may be approximately 1000 mA. A second voltage of the second battery (e.g., the second battery 311 of FIG. 3) may be within the first range of 0 V or more and less than 4.16 V. The at least one processor 120 may identify a value of a second charging current based on the second voltage of the second battery 311. The value of the second charging current corresponding to the first range may be approximately 2000 mA. In the first state 501, a total charging current value may be approximately 3000 mA. A distribution ratio may be 1:2. The distribution ratio may be controlled to be similar to or equal to a ratio between a capacity of the first battery 309 and a capacity of the second battery 311, such that a degree of charge of the first battery 309 and the second battery 311 having different capacities may be similarly adjusted.

In a second state 503, the first voltage of the first battery 309 may be within the first range of 0 V or more and less than 4.16 V. The at least one processor 120 may identify the value of the first charging current based on the first voltage of the first battery 309. The value of the first charging current corresponding to the first range may be approximately 1000 mA. The second voltage of the second battery 311 may be within a second range of 4.16 V or more and less than 4.28 V. The at least one processor 120 may identify the value of the second charging current based on the second voltage of the second battery 311. The value of the second charging current corresponding to the second range may be approximately 1600 mA. In the second state 503, the total charging current value may be approximately 2600 mA. The distribution ratio may be 5:8. In the second state 503, even if the distribution ratio is the ratio between the capacity of the first battery 309 and the capacity of the second battery 311, charging speed of the second battery 311 may be faster than charging speed of the first battery 309. This is because resistance of a conductive line from a charger (e.g., the electronic device 102 of FIG. 1) to the first battery 309 and resistance of a conductive line from the charger 102 to the second battery 311 may be different. This is because power consumption of the conductive line from the charger 102 to the first battery 309 and power consumption of the conductive line from the charger 102 to the second battery 311 may be different. Therefore, even if the second voltage is within the second range, the first voltage may be within the first range. The charger 102 may be an external device supplying power for charging. The charger 102 may be an external device connected to the electronic device 101 through a connecting terminal (e.g., the connecting terminal 178 of FIG. 1).

In a third state 505, the first voltage of the first battery 309 may be within the first range of 0 V or more and less than 4.16 V. The at least one processor 120 may identify the value of the first charging current based on the first voltage of the first battery 309. The value of the first charging current corresponding to the first range may be approximately 1000 mA. The second voltage of the second battery 311 may be within a third range of 4.28 V or more and less than 4.47 V. The at least one processor 120 may identify the value of the second charging current based on the second voltage of the second battery 311. The value of the second charging current corresponding to the second range may be approximately 1200 mA. In the third state 505, the total charging current value may be approximately 2200 mA. The distribution ratio may be 5:6. The charging speed of the second battery 311 may be faster than the charging speed of the first battery 309. This is because the resistance of the conductive line from the charger 102 to the first battery 309 and the resistance of the conductive line from the charger 102 to the second battery 311 may be different. This is because the power consumption of the conductive line from the charger 102 to the first battery 309 and the power consumption of the conductive line from the charger 102 to the second battery 311 may be different. Therefore, even if the second voltage is within the third range, the first voltage may be within the first range.

In a fourth state 507, the first voltage of the first battery 309 may be within the second range of 4.16 V or more and less than 4.28 V. The at least one processor 120 may identify the value of the first charging current based on the first voltage of the first battery 309. The value of the first charging current corresponding to the first voltage in the second range may be approximately 800 mA. The second voltage of the second battery 311 may be within the first range of 0 V or more and less than 4.16 V. The at least one processor 120 may identify the value of the second charging current based on the second voltage of the second battery 311. The value of the second charging current corresponding to the first range may be approximately 2000 mA. In the fourth state 507, the total charging current value may be approximately 2800 mA. The distribution ratio may be 2:5. The charging speed of the second battery 311 may be slower than the charging speed of the first battery 309. This is because the resistance of the conductive line from the charger 102 to the first battery 309 and the resistance of the conductive line from the charger 102 to the second battery 311 may be different. This is because the power consumption of the conductive line from the charger 102 to the first battery 309 and the power consumption of the conductive line from the charger 102 to the second battery 311 may be different. Therefore, even if the first voltage is within the second range, the second voltage may be within the first range.

In a fifth state 509, the first voltage of the first battery 309 may be within the second range of 4.16 V or more and less than 4.28 V. The at least one processor 120 may identify the value of the first charging current based on the first voltage of the first battery 309. The value of the first charging current corresponding to the second range may be approximately 800 mA. The second voltage of the second battery 311 may be within the second range of 4.16 V or more and less than 4.28 V. The at least one processor 120 may identify the value of the second charging current based on the second voltage of the second battery 311. The value of the second charging current corresponding to the second voltage in the second range may be approximately 1600 mA. In the fifth state 509, the total charging current value may be approximately 2400 mA. The distribution ratio may be 1:2. The distribution ratio may be controlled to be similar to or equal to the ratio between the capacity of the first battery 309 and the capacity of the second battery 311, such that the degree of charge of the first battery 309 and the second battery 311 having different capacities may be similarly adjusted.

In a sixth state 511, the first voltage of the first battery 309 may be within the second range of 4.16 V or more and less than 4.28 V. The at least one processor 120 may identify the value of the first charging current based on the first voltage of the first battery 309. The value of the first charging current corresponding to the second range may be approximately 800 mA. The second voltage of the second battery 311 may be within the third range of 4.28 V or more and less than 4.47 V. The at least one processor 120 may identify the value of the second charging current based on the second voltage of the second battery 311. The value of the second charging current corresponding to the second voltage in the third range may be approximately 1200 mA. In the sixth state 511, the total charging current value may be approximately 2000 mA. The distribution ratio may be 2:3 In the sixth state 511, even if the distribution ratio is the ratio between the capacity of the first battery 309 and the capacity of the second battery 311, the charging speed of the second battery 311 may be faster than the charging speed of the first battery 309. This is because the resistance of the conductive line from the charger 102 to the first battery 309 and the resistance of the conductive line from the charger 102 to the second battery 311 may be different. This is because the power consumption of the conductive line from the charger 102 to the first battery 309 and the power consumption of the conductive line from the charger 102 to the second battery 311 may be different. Therefore, even if the first voltage is within the second range, the second voltage may be within the third range.

In a seventh state 513, the first voltage of the first battery 309 may be within the third range of 4.28 V or more and less than 4.47 V. The at least one processor 120 may identify the value of the first charging current based on the first voltage of the first battery 309. The value of the first charging current corresponding to the first voltage in the third range may be approximately 600 mA. The second voltage of the second battery 311 may be within the first range of 0 V or more and less than 4.16 V. The at least one processor 120 may identify the value of the second charging current based on the second voltage of the second battery 311. The value of the second charging current corresponding to the second voltage in the first range may be approximately 2000 mA. In the seventh state 513, the total charging current may be approximately 2600 mA. The distribution ratio may be 3:10. The charging speed of the second battery 311 may be slower than the charging speed of the first battery 309. This is because the resistance of the conductive line from the charger 102 to the first battery 309 and the resistance of the conductive line from the charger 102 to the second battery 311 may be different. This is because the power consumption of the conductive line from the charger 102 to the first battery 309 and the power consumption of the conductive line from the charger 102 to the second battery 311 may be different. Therefore, even if the first voltage is within the third range, the second voltage may be within the first range.

In the eighth state 515, the first voltage of the first battery 309 may be within the third range of 4.28 V or more and less than 4.47 V. The at least one processor 120 may identify the value of the first charging current based on the first voltage of the first battery 309. The value of the first charging current corresponding to the first voltage in the third range may be approximately 600 mA. The second voltage of the second battery 311 may be within the second range of 4.16 V or more and less than 4.28 V. The at least one processor 120 may identify the value of the second charging current based on the second voltage of the second battery 311. The value of the second charging current corresponding to the second range may be approximately 1600 mA. In the eighth state 515, the total charging current value may be approximately 2200 mA. The distribution ratio may be 3:8. The charging speed of the second battery 311 may be slower than the charging speed of the first battery 309. This is because the resistance of the conductive line from the charger 102 to the first battery 309 and the resistance of the conductive line from the charger 102 to the second battery 311 may be different. This is because the power consumption of the conductive line from the charger 102 to the first battery 309 and the power consumption of the conductive line from the charger 102 to the second battery 311 may be different. Therefore, even if the first voltage is within the third range, the second voltage may be within the second range.

In a ninth state 517, the first voltage of the first battery 309 may be within the third range of 4.28 V or more and less than 4.47 V. The at least one processor 120 may identify the value of the first charging current based on the first voltage of the first battery 309. The value of the first charging current corresponding to the first voltage in the third range may be approximately 600 mA. The second voltage of the second battery 311 may be within the third range of 4.28 V or more and less than 4.47 V. The at least one processor 120 may identify the value of the second charging current based on the second voltage of the second battery 311. The value of the second charging current corresponding to the second voltage in the third range may be approximately 1200 mA. In the ninth state 517, the total charging current value may be approximately 1800 mA. The distribution ratio may be 1:2. The distribution ratio may be controlled to be similar to or equal to the ratio between the capacity of the first battery 309 and the capacity of the second battery 311, such that the degree of charge of the first battery 309 and the second battery 311 having different capacities may be similarly adjusted.

According to an embodiment, the at least one processor 120 may reduce a charging time compared to a case that the distribution ratio is constant by changing the distribution ratio based on the first voltage and the second voltage. This is because the charging speed of the first battery 309 and the second battery 311 may be different from each other. According to an embodiment, if the distribution ratio is constant, the total charging current value may be identified based on a lower charging current value among the first charging current value and the second charging current value, in a case that the first voltage and the second voltage are included in different ranges. For example, if the distribution ratio is constant, the total charging current value may be determined based on the second charging current value of the second battery 311, in a case that the first voltage is within the first range and the second voltage is within the second range. This may be to maintain the second charging current to be less than or equal to a guaranteed current value of the second battery 311. In a case that the total charging current value is determined based on the second charging current value, the first charging current may be lower than a guaranteed current value corresponding to the first voltage. Thus, in a case that the distribution ratio is constant, the charging time of batteries may be longer compared to a case that the distribution ratio is changed based on the first voltage and the second voltage.

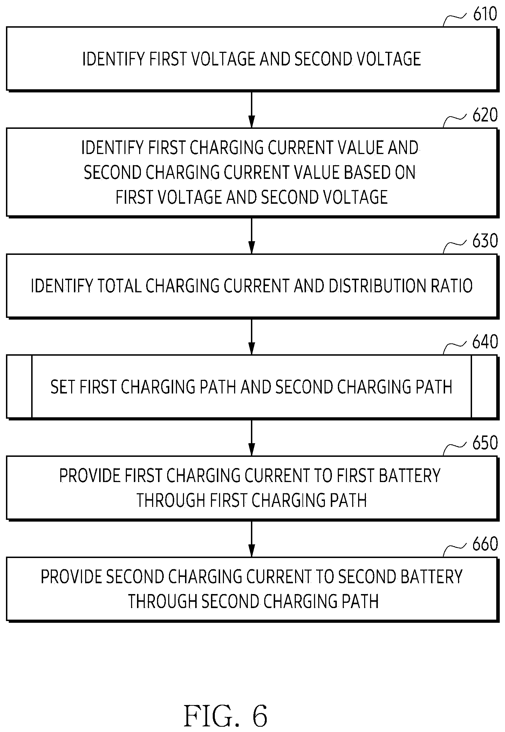

FIG. 6 illustrates a flow of an operation of an electronic device for charging a plurality of batteries based on a distribution ratio.

Referring to FIG. 6, in an operation 610, at least one processor may identify a first voltage and a second voltage. According to an embodiment, the first voltage of the first battery (e.g., the first battery 309 of FIG. 3) may be identified via the first limiter (e.g., the first limiter 305 of FIG. 3) for the first battery 309. The first limiter 305 may identify a current of a first charging current for charging the first battery 309 and a voltage applied to the first battery 309 through a pack sensing scheme. The second voltage of the second battery 311 (the second battery 311 of FIG. 3) may be identified via the second limiter 307 (the second limiter 307 of FIG. 3) for the second battery 311. The second limiter 307 may identify a second charging current value for charging the second battery 311 and a voltage value applied to the second battery 311 through the pack sensing scheme. The first limiter 305 may be an active element for measuring a voltage of the first battery 309. The second limiter 307 may be an active element for measuring a voltage of the second battery 311.

In an operation 620, the at least one processor 120 may identify a first charging current value and the second charging current value based on the first voltage and the second voltage. According to an embodiment, as a charging time of the first battery 309 increases, a charging amount of the first battery 309 may increase. As the charging amount of the first battery 309 increases, a charging current of the first battery 309 may be reduced. As a charging time of the second battery 311 increases, a charging amount of the second battery 311 may increase. As the charging amount of the second battery 311 increases, a charging current of the second battery 311 may be reduced.

According to an embodiment, the at least one processor 120 may identify the first charging current value based on a guaranteed current of the first battery 309. The at least one processor 120 may identify the second charging current value based on a guaranteed current of the second battery 311. The guaranteed current is an intensity of a current recommended to maximize a life of the battery. In a first charging scheme (a constant current (CC) mode), the first charging current value may be determined based on the first voltage of the first battery 309. For example, in a case that the first voltage is within a first range, the at least one processor 120 may set the first charging current value to a first designated value. In a case that the first voltage is within a second range, the first charging current value may be set as a second designated value. In a case that the first voltage is within a third range, the first charging current value may be set to a fifth designated value. A maximum value of the first range may be less than a minimum value of the second range. A maximum value of the second range may be less than a minimum value of the third range. The first designated value may be greater than the second designated value. The second designated value may be greater than the fifth designated value. The first range may be less than 4.16 V. The first designated value may be approximately 1000 mA. The second range may be 4.16 V or more and less than 4.28 V. The second designated value may be approximately 800 mA. The third range may be greater than or equal to 4.28 V and less than 4.47 V. The fifth designated value may be approximately 600 mA. In the first charging scheme (the constant current (CC) mode), the second charging current value may be determined based on the second voltage of the second battery 311. For example, in a case that the second voltage is within the first range, the at least one processor 120 may set the second charging current value to a third designated value. In a case that the second voltage is within the second range, the second charging current value may be set to a fourth designated value. In a case that the second voltage is within the third range, the second charging current value may be set to a sixth designated value. The first range may be less than 4.16 V. The third designated value may be approximately 2000 mA. The second range may be 4.16 V or more and less than 4.28 V. The fourth designated value may be approximately 1600 mA. The third range may be greater than or equal to 4.28 V and less than 4.47 V. The sixth designated value may be approximately 1200 mA. According to an embodiment, in a case that both the first voltage and the second voltage are within the same range (e.g., the first range, the second range, or the third range), the distribution ratio may a ratio between a capacity of the first battery 309 and a capacity of the second battery 311. This may be to match a degree of charge of the first battery 309 and the second battery 311 having different capacities similarly. According to an embodiment, in the first range, even if the distribution ratio is the ratio between the capacity of the first battery 309 and the capacity of the second battery 311, a degree of charge of the first battery 309 and a degree of charge of the second battery 311 may be different. This is because resistance of a conductive line from a charger (e.g., the electronic device 102 of FIG. 1) to the first battery 309 and resistance of a conductive line from the charger 102 to the second battery 311 may be different. This is because power consumption of the conductive line from the charger 102 to the first battery 309 and power consumption of the conductive line from the charger 102 to the second battery 311 may be different.

According to an embodiment, when the first voltage and the second voltage approach a reference value, the at least one processor 120 may change a charging scheme from the first charging scheme to a second charging scheme. For example, the first charging scheme may be referred to as the constant current (CC) mode. In the first charging scheme, the battery (the first battery 309 or the second battery 311) may be charged with a constant current. The second charging scheme may be referred to as a constant voltage (CV) mode. In the second charging scheme, the battery (the first battery 309 or the second battery 311) may be charged with a constant voltage.

In an operation 630, the at least one processor 120 may identify a total charging current and the distribution ratio. The total charging current may be divided into the first charging current and the second charging current based on the distribution ratio. The distribution ratio may be the identified second charging current value with respect to the identified first charging current value. For example, when the first charging current value is approximately 1000 mA and the second charging current value is approximately 2000 mA, the total charging current value may be approximately 3000 mA. When the first charging current value is approximately 1000 mA and the second charging current value is approximately 2000 mA, the distribution ratio may be 1:2. For example, when the first charging current value is approximately 1000 mA and the second charging current value is approximately 1600 mA, the total charging current value may be approximately 2600 mA. When the first charging current value is approximately 1000 mA and the second charging current value is approximately 1600 mA, the distribution ratio may be 5:8.

In an operation 640, the at least one processor 120 may set a first charging path and a second charging path. According to an embodiment, the at least one processor 120 may generate a control signal for setting the total charging current for charging the first battery 309 and the second battery 311 to a sum of the first charging current value and the second charging current value. The at least one processor 120 may transmit the control signal to the charger 102. For example, when the identified first charging current value is approximately 1000 mA and the identified second charging current value is approximately 2000 mA, the at least one processor 120 may generate a control signal to set the total charging current value to approximately 3000 mA. The at least one processor 120 may transmit the control signal to the charger 102. For another example, when the identified first charging current value is approximately 1000 mA and the identified second charging current value is approximately 1600 mA, the at least one processor 120 may generate a control signal for setting the total charging current value to approximately 2600 mA. The at least one processor 120 may transmit the control signal to the charger 102.

According to an embodiment, the at least one processor 120 may set the first charging path for the first battery and the second charging path for the second battery to have the identified distribution ratio. The first charging path may include the first limiter 305. The first charging path may be a path in which the distribution ratio of the total charging current is adjusted. The second charging path may include the second limiter 307. The second charging path may be a path in which the distribution ratio of the total charging current value is adjusted. The at least one processor 120 may control a current flowing through the first limiter 305 to be the identified first charging current value. The at least one processor 120 may control a current flowing through the second limiter 307 to be the identified second charging current value.

In an operation 650, the at least one processor 120 may provide the first charging current to the first battery through the first charging path. The at least one processor 120 may control the first charging current to have the identified first charging current value based on the identified total charging current value and the identified distribution ratio. According to an embodiment, the charger 102 receiving the control signal may adjust the total charging current value. The at least one processor 120 may distribute the total charging current value at the identified distribution ratio.

In an operation 660, the at least one processor 120 may provide the second charging current to the second battery through the second charging path. The at least one processor 120 may control the second charging current to have the identified second charging current value based on the identified total charging current value and the identified distribution ratio. According to an embodiment, the charger 102 receiving the control signal may adjust the total charging current value. The at least one processor 120 may distribute the total charging current value at the identified distribution ratio.

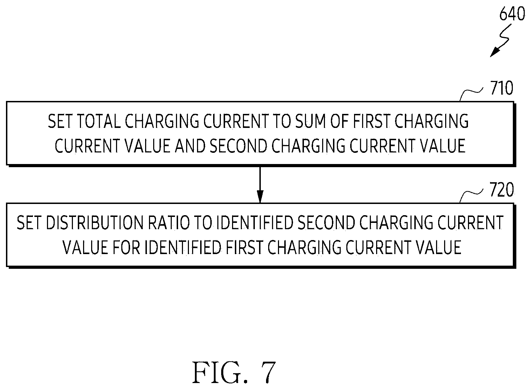

FIG. 7 illustrates a flow of an operation of an electronic device for identifying a distribution ratio.

Referring to FIG. 7, in an operation 710, at least one processor 120 may set a total charging current value to a sum of a first charging current value and a second charging current value. The total charging current value may be divided into a first charging current and a second charging current. Therefore, the at least one processor 120 may control an intensity of the first charging current to be the identified first charging current value when setting the total charging current to the sum of the identified first charging current value and the identified second charging current value. The at least one processor 120 may control an intensity of the second charging current value to be the identified second charging current value when setting the total charging current value to be the sum of the identified first charging current value and the identified second charging current value. For example, when the first charging current value is approximately 1000 mA and the second charging current value is approximately 2000 mA, the total charging current value may be approximately 3000 mA. For example, when the first charging current value is approximately 1000 mA and the second charging current value is approximately 1600 mA, the total charging current value may be approximately 2600 mA.

According to an embodiment, the at least one processor 120 may generate a control signal for setting the total charging current value for charging the first battery 309 and the second battery 311 to the sum of the first charging current value and the second charging current value. The at least one processor 120 may transmit the control signal to a charger (e.g., the electronic device 102 of FIG. 1). For example, the at least one processor 120 may generate a control signal for setting the total charging current value to approximately 3000 mA. For example, the at least one processor 120 may generate a control signal for setting the total charging current value to approximately 2600 mA. The charger 102 may be an external device supplying power for charging. The charger 102 may be an external device connected to the electronic device 101 through a connecting terminal (e.g., the connecting terminal 178 of FIG. 1).

In an operation 720, a distribution ratio may be set to the identified second charging current value for the identified first charging current value. For example, when the first charging current value is approximately 1000 mA and the second charging current value is approximately 2000 mA, the total charging current value may be approximately 3000 mA. When the first charging current value is approximately 1000 mA and the second charging current value is approximately 2000 mA, the distribution ratio may be 1:2. For example, when the first charging current value is approximately 1000 mA and the second charging current value is approximately 1600 mA, the total charging current value may be approximately 2600 mA. When the first charging current value is approximately 1000 mA and the second charging current value is approximately 1600 mA, the distribution ratio may be 5:8. The distribution ratio may not be maintained as a ratio between a capacity of the first battery 309 and a capacity of the second battery 311. According to an embodiment, the at least one processor 120 may reduce a charging time compared to a case that the distribution ratio is constant, by changing the distribution ratio. This is because charging speed of the first battery and the second battery may be different from each other. According to an embodiment, if the distribution ratio is constant, the total charging current value may be identified based on a lower charging current value among the first charging current value and the second charging current value, in a case that the first voltage and the second voltage are included in different ranges.

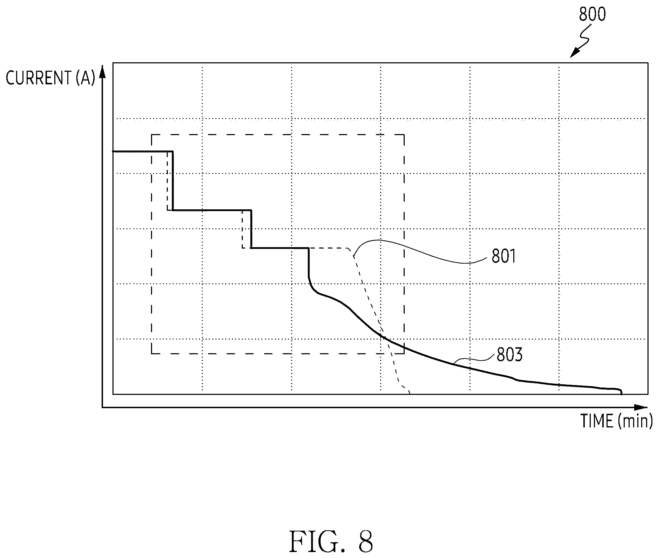

FIG. 8 illustrates a power charging time reduction effect.

Referring to FIG. 8, a graph 800 may indicate an intensity of a charging current that is reduced in accordance with a charging time. An X-axis may be a charging time. A unit of the X-axis is a minute. A Y-axis may be a charging current. A unit of the Y-axis is ampere (A). A first line 801 may be an intensity of a total charging current adjusted without changing a distribution ratio based on a voltage measured by a cell sensing scheme. The distribution ratio may be a ratio of a capacity of a second battery with respect to a capacity of a first battery. The total charging current may be divided into the first charging current and the second charging current based on the distribution ratio. By identifying a voltage applied to the battery (e.g., the first battery 211 or the second battery 215 of FIG. 2) through the cell sensing scheme, at least one processor (e.g., the processor 120 of FIG. 1) may obtain the voltage of the battery 211 or 215. The at least one processor 120 may reduce the total charging current based on the voltage obtained through the cell sensing scheme.

A second line 803 may be an intensity of the total charging current adjusted without changing the distribution ratio, based on a voltage measured by a pack sensing scheme. The at least one processor 120 may obtain a voltage of the battery 211 or 215 by identifying the voltage applied to the battery 211 or 215 through the pack sensing scheme. The at least one processor 120 may identify a voltage applied to a limiter (e.g., the first limiter 209 or the second limiter 213 of FIG. 2) connected to the battery 211 or 215 through the pack sensing scheme. The at least one processor 120 may obtain the voltage of the battery 211 or 215 based on the voltage applied to the limiter 209 or 213. The at least one processor 120 may reduce the total charging current based on the voltage obtained through the pack sensing scheme.

According to an embodiment, as a charging time of the battery 211 or 215 increases, a charging amount of the battery 211 or 215 may increase. As the charging amount of the battery 211 or 215 increases, a charging current of the battery 211 or 215 may be reduced.

According to an embodiment, the at least one processor 120 may charge the battery in accordance with a charging mode of one of a first charging scheme and a second charging scheme. The first charging scheme may be referred to as a constant current (CC) mode. The second charging scheme may be referred to as a constant voltage (CV) mode. In the first charging scheme, the battery 211 or 215 may be charged with a constant current. As the battery 211 or 215 is charged with the constant current, the voltage of the battery 211 or 215 may increase. If the voltage of the battery 211 or 215 approaches a reference value, the at least one processor 120 may charge the battery in the second charging scheme to reduce noise. In the second charging scheme, the battery 211 or 215 may be charged with a constant voltage. As the battery 211 or 215 is charged with the constant voltage, a current of the battery 211 or 215 may be reduced.

According to an embodiment, the pack sensing scheme may have lower accuracy of the identified voltage than the cell sensing scheme. This is because the voltage applied to the limiter 209 or 213 and the voltage applied to circuitry connecting the limiter 209 or 213 and the battery 211 or 215 affect each other. When the battery 211 or 215 is charged by the pack sensing scheme, the charging time of the battery 211 or 215 may increase. For example, the second line 803 may have a later time when the total charging current becomes 0A compared to the first line 801. A time when the total charging current becomes 0A may mean a full charging time.

According to an embodiment, the electronic device 101 including the plurality of batteries may have difficulty identifying voltages of the plurality of batteries by the cell sensing scheme. Therefore, a full charging time of the electronic device 101 including the plurality of batteries may be longer than a full charging time of the electronic device including the single battery. Even if the battery is charged by the pack sensing scheme, the at least one processor 120 may reduce the full charging time by adjusting the distribution ratio of the first charging current and the second charging current.

According to an embodiment, the at least one processor 120 may adjust the distribution ratio to reduce the full charging time extended by the pack sensing scheme.

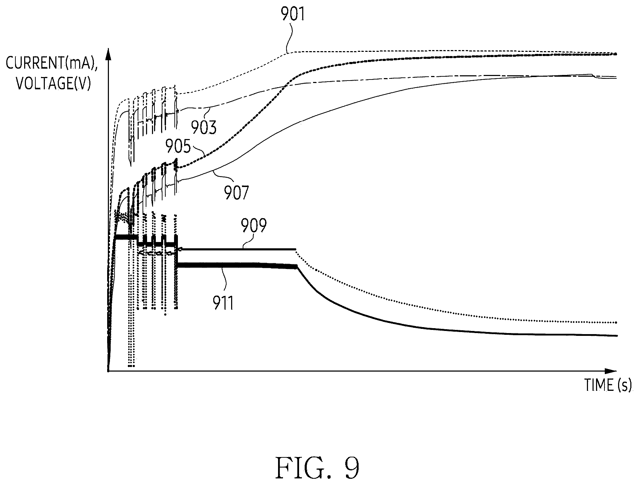

FIG. 9 illustrates a voltage and a current of a plurality of batteries with respect to a charging time.

Referring to FIG. 9, a graph 900 may indicate an intensity of a charging current that is reduced in accordance with a charging time. An X-axis may be a charging time. A unit of the X-axis is a second. A Y-axis may be a charging current or a charging voltage. A unit of the Y-axis is mill-ampere (mA). A unit of the Y-axis is a voltage (V). A first line 901 may be a voltage of a first battery measured by a pack sensing scheme. A second line 903 may be a voltage of a second battery measured by the pack sensing scheme. A third line 905 may be a voltage of the first battery measured by a cell sensing scheme. A fourth line 907 may be a voltage of the second battery measured by the cell sensing scheme. A fifth line 909 may be an intensity of a second charging current adjusted without changing a distribution ratio, based on the voltage measured by the cell sensing scheme. A sixth line 911 may be an intensity of a first charging current adjusted without changing the distribution ratio based on the voltage measured by the cell sensing scheme.

According to an embodiment, a first range of the first battery 309 and a first range of the second battery 311 may be different from each other. For example, the first battery 309 may have a first charging current value of approximately 1000 mA at less than 4.247 V. The second battery may have a second charging current value of approximately 2000 mA at less than 4.452 V. However, even in this case, if the distribution ratio is not changed, a full charging time may be extended compared to a case that the distribution ratio is changed.

Both the first line 901 and the third line 905 may be a value identifying the voltage of the first battery 309. The voltages of the first line 901 and the third line 905 may be different from each other. Accordingly, an error may occur in the measured value of the first voltage. Both the second line 903 and the fourth line 907 may be a value identifying the voltage of the second battery 311. The voltages of the second line 903 and the fourth line 907 may be different from each other. Accordingly, an error may occur in the measured value of the second voltage. Thus, measuring the voltage in the cell sensing scheme may reduce the error of the first voltage and the second voltage. When the error of the first voltage and the second voltage is reduced, a time point of reducing the first charging current and the second charging current may be delayed. If the time point of reducing the first charging current and the second charging current is delayed, the full charging time may be reduced.

According to an embodiment, the electronic device 101 including the plurality of batteries may have difficulty identifying voltages of the plurality of batteries by the cell sensing scheme. Therefore, a full charging time of the electronic device 101 including the plurality of batteries may be longer than a full charging time of the electronic device including the single battery. Even if the battery is charged by the pack sensing scheme, the at least one processor 120 may reduce the full charging time by adjusting the distribution ratio of the first charging current and the second charging current.

According to an embodiment, the at least one processor 120 may adjust the distribution ratio to reduce the full charging time extended by the pack sensing scheme.

As described above, according to an embodiment, an electronic device 101 may comprise at least one processor 120 or 301, a first battery 189, 211, or 309, and a second battery 189, 215, or 311. The at least one processor 120 or 301 may be configured to identify a first voltage of the first battery 189, 211, or 309 and a second voltage of the second battery 189, 215, or 311. The at least one processor 120 or 301 may be configured to identify a first charging current value corresponding to a charging state of the first battery 189, 211, or 309 based on the first voltage of the first battery 189, 211, or 309. The at least one processor 120 or 301 may be configured to identify a second charging current value corresponding to a charging state of the second battery 189, 215, or 311 based on the second voltage of the second battery 189, 215, or 311. The at least one processor 120 or 301 may be configured to identify a total charging current value and a distribution ratio based on the first charging current value and the second charging current value. The at least one processor 120 or 301 may be configured to set a first charging path for the first battery 189, 211, or 309 and a second charging path for the second battery 189, 215, or 311 to have the distribution ratio. The at least one processor 120 or 301 may be configured to provide a first charging current in accordance with the first charging current value to the first battery 189, 211, or 309 through the first charging path. The at least one processor 120 or 301 may be configured to provide a second charging current in accordance with the second charging current value to the second battery 189, 215, or 311 through the second charging path.

As described above, according to an embodiment, an electronic device 101 may comprise memory storing instructions, at least one processor 120 or 301, a first battery 189, 211, or 309, and a second battery 189, 215, or 311. The instructions, when executed by the at least one processor 120 or 301, may cause the electronic device 101 to identify a first voltage of the first battery 189, 211, or 309 and a second voltage of the second battery 189, 215, or 311, identify a first charging current value corresponding to a charging state of the first battery 189, 211, or 309 based on the first voltage of the first battery 189, 211, or 309, identify a second charging current value corresponding to a charging state of the second battery 189, 215, or 311 based on the second voltage of the second battery 189, 215, or 311, identify a total charging current value and a distribution ratio based on the first charging current value and the second charging current value, set a first charging path for the first battery 189, 211, or 309 and a second charging path for the second battery 189, 215, or 311 to have the distribution ratio, provide a first charging current in accordance with the first charging current value to the first battery 189, 211, or 309 through the first charging path, and provide a second charging current in accordance with the second charging current value to the second battery 189, 215, or 311 through the second charging path.

According to an embodiment, to provide the first charging current to the first battery 189, 211, or 309 through the first charging path and to provide the second charging current to the second battery 189, 215, or 311 through the second charging path, the at least one processor 120 or 301 may be configured to generate a control signal for setting the total charging current for charging the first battery 189, 211, or 309 and the second battery 189, 215, or 311 to a sum of the first charging current value and the second charging current value. To provide the first charging current to the first battery 189, 211, or 309 through the first charging path and to provide the second charging current to the second battery 189, 215, or 311 through the second charging path, the at least one processor 120 or 301 may be configured to transmit the control signal to a charger (e.g., the electronic device 102 of FIG. 1). The charger 102 may be an external device supplying power for charging. The charger 102 may be an external device connected to the electronic device 101 through a connecting terminal (e.g., the connecting terminal 178 of FIG. 1).

According to an embodiment, the first charging path may include a first limiter 209 or 305 for the first battery 189, 211, or 309. The second charging path may include a second limiter 213 or 307 for the second battery 189, 215, or 311. The at least one processor 120 or 301 may be, to provide the first charging current in accordance with the first charging current value to the first battery 189, 211, or 309, configured to control a current flowing through the first limiter 209 or 305 to be the first charging current value. The at least one processor 120 or 301 may be, to provide the second charging current in accordance with the second charging current value to the second battery 189, 215, or 311, configured to control a current flowing through the second limiter 213 or 307 to be the second charging current value.

According to an embodiment, the at least one processor 120 or 301 may be, to identify the first charging current value corresponding to the charging state of the first battery 189, 211, or 309 based on the first voltage of the first battery 189, 211, or 309, configured to, in a case that the first voltage of the first battery 189, 211, or 309 is within a first range, set the first charging current value to a first designated value. The at least one processor 120 or 301 may be, to identify the first charging current value corresponding to the charging state of the first battery 189, 211, or 309 based on the first voltage of the first battery 189, 211, or 309, configured to, in a case that the first voltage of the first battery 189, 211, or 309 is within a second range, set the first charging current value to a second designated value. The maximum value of the first range may be less than a minimum value of the second range. The first designated value may be greater than the second designated value. The at least one processor 120 or 301 may be, to identify the second charging current value corresponding to the charging state of the second battery 189, 215, or 311 based on the second voltage of the second battery 189, 215, or 311, configured to, in a case that the second voltage of the second battery 189, 215, or 311 is within a first range, set the second charging current value to a third designated value. The at least one processor 120 or 301 may be, to identify the second charging current value corresponding to the charging state of the second battery 189, 215, or 311 based on the second voltage of the second battery 189, 215, or 311, configured to, in a case that the second voltage of the second battery 189, 215, or 311 is within a second range, set the second charging current value to a fourth designated value. A maximum value of the first range may be less than a minimum value of the second range. The third designated value may be greater than the fourth designated value.

According to an embodiment, the first voltage of the first battery 189, 211, or 309 may be identified via the first limiter 209 or 305 for the first battery 189, 211, or 309. The second voltage of the second battery 189, 215, or 311 may be identified via the second limiter 213 or 307 for the second battery 189, 215, or 311.

According to an embodiment, the total charging current may be divided into the first charging current and the second charging current based on the distribution ratio.

According to an embodiment, the distribution ratio may be the ratio of the identified second charging current value to the identified first charging current value.

According to an embodiment, in a case that both the first voltage and the second voltage are within the first range, the ratio of the first designated value and the second designated value may be a fixed value. In a case that the first voltage and the second voltage are within the second range, the ratio of the first designated value and the second designated value may be the fixed value. The fixed value may be a ratio of a capacity of the first battery 189, 211, or 309 and a capacity of the second battery 189, 215, or 311.

According to an embodiment, the at least one processor 120 or 301 may be configured to, when the first voltage or the second voltage approaches a reference value, change a charging scheme from a first charging scheme to a second charging scheme. The at least one processor 120 or 301 may be configured to, in the second charging scheme, further reduce the first charging current for charging the first battery 189, 211, or 309 to maintain the first voltage at the reference value. The at least one processor 120 or 301 may be configured to, in the second charging scheme, further reduce the second charging current for charging the second battery 189, 215, or 311 to maintain the second voltage at the reference value.

According to an embodiment, the at least one processor 120 or 301 may be configured to perform charging the first battery 189, 211, or 309 and the second battery 189, 215, or 311 by the first charging scheme. The first charging scheme may perform charging with a first power, in the at least one processor 120 or 301. The second charging scheme may perform charging with a second power, in the at least one processor 120 or 301. The first power may be greater than the second power.

As described above, according to an embodiment, a method performed by an electronic device 101 may comprise identifying a first voltage of the first battery 189, 211, or 309 and a second voltage of the second battery 189, 215, or 311. The method may comprise identifying a first charging current value corresponding to a charging state of the first battery 189, 211, or 309 based on the first voltage of the first battery 189, 211, or 309. The method may comprise identifying a second charging current value corresponding to a charging state of the second battery 189, 215, or 311 based on the second voltage of the second battery 189, 215, or 311. The method may comprise identifying a total charging current value and a distribution ratio based on the first charging current value and the second charging current value. The method may comprise setting a first charging path for the first battery 189, 211, or 309 and a second charging path for the second battery 189, 215, or 311 to have the distribution ratio. The method may comprise providing a first charging current in accordance with the first charging current value to the first battery 189, 211, or 309 through the first charging path. The method may comprise providing a second charging current in accordance with the second charging current value to the second battery 189, 215, or 311 through the second charging path.

According to an embodiment, the providing the first charging current to the first battery 189, 211, or 309 through the first charging path and the providing the second charging current to the second battery 189, 215, or 311 through the second charging path may comprise generating a control signal for setting the total charging current for charging the first battery 189, 211, or 309 and the second battery 189, 215, or 311 to a sum of the first charging current value and the second charging current value. The providing the first charging current to the first battery 189, 211, or 309 through the first charging path and the providing the second charging current to the second battery 189, 215, or 311 through the second charging path may comprise transmitting the control signal to a charger 102.

According to an embodiment, the first charging path may include a first limiter 209 or 305 for the first battery 189, 211, or 309. The second charging path may include a second limiter 213 or 307 for the second battery 189, 215, or 311. The providing the first charging current in accordance with the first charging current value to the first battery 189, 211, or 309 may comprise controlling a current flowing through the first limiter 209 or 305 to be the first charging current value. The providing the second charging current in accordance with the second charging current value to the second battery 189, 215, or 311 may comprise controlling a current flowing through the second limiter 213 or 307 to be the second charging current value.

According to an embodiment, the identifying the first charging current value corresponding to the charging state of the first battery 189, 211, or 309 based on the first voltage of the first battery 189, 211, or 309 may comprise, in a case that the first voltage of the first battery 189, 211, or 309 is within a first range, setting the first charging current value to a first designated value. The identifying the first charging current value corresponding to the charging state of the first battery 189, 211, or 309 based on the first voltage of the first battery 189, 211, or 309 may comprise, in a case that the first voltage of the first battery 189, 211, or 309 is within a second range, setting the first charging current value to a second designated value. A maximum value of the first range may be less than a minimum value of the second range. The first designated value may be greater than the second designated value. The identifying the second charging current value corresponding to the charging state of the second battery 189, 215, or 311 based on the second voltage of the second battery 189, 215, or 311 may comprise, in a case that the second voltage of the second battery 189, 215, or 311 is within a first range, setting the second charging current value to a third designated value. The identifying the second charging current value corresponding to the charging state of the second battery 189, 215, or 311 based on the second voltage of the second battery 189, 215, or 311 may comprise, in a case that the second voltage of the second battery 189, 215, or 311 is within a second range, setting the second charging current value to a fourth designated value. A maximum value of the first range may be less than a minimum value of the second range. The third designated value may be greater than the fourth designated value.

According to an embodiment, the first voltage of the first battery 189, 211, or 309 may be identified via the first limiter 209 or 305 for the first battery 189, 211, or 309. The second voltage of the second battery 189, 215, or 311 may be identified via the second limiter 213 or 307 for the second battery 189, 215, or 311.

According to an embodiment, the total charging current may be divided into the first charging current and the second charging current based on the distribution ratio.

According to an embodiment, the distribution ratio may be a ratio of the identified second charging current value to the identified first charging current value.

According to an embodiment, in a case that both the first voltage and the second voltage are within the first range, the ratio of the first designated value and the second designated value may be a fixed value. In a case that the first voltage and the second voltage are within the second range, the ratio of the first designated value and the second designated value may be the fixed value. The fixed value may be a ratio of a capacity of the first battery 189, 211, or 309 and a capacity of the second battery 189, 215, or 311.

According to an embodiment, when the first voltage or the second voltage approaches a reference value, changing a charging scheme from a first charging scheme to a second charging scheme may further comprise, in the second charging scheme, reducing the first charging current for charging the first battery 189, 211, or 309 to maintain the first voltage at the reference value. When the first voltage or the second voltage approaches a reference value, changing a charging scheme from a first charging scheme to a second charging scheme may further comprise, in the second charging scheme, reducing the second charging current for charging the second battery 189, 215, or 311 to maintain the second voltage at the reference value.

According to an embodiment, the first charging scheme may perform charging with a first power. The second charging scheme may perform charging with a second power. The first power may be greater than the second power.

In embodiments, a non-transitory computer readable storage medium is provided. The non-transitory computer readable storage medium may comprise memory storing instructions. The instructions, when executed by a processor, may cause an electronic device to identify a first voltage of a first battery and a second voltage of a second battery, identify a first charging current value corresponding to a charging state of the first battery based on the first voltage of the first battery, identify a second charging current value corresponding to a charging state of the second battery based on the second voltage of the second battery, identify a total charging current value and a distribution ratio based on the first charging current value and the second charging current value, set a first charging path for the first battery and a second charging path for the second battery to have the distribution ratio, provide a first charging current in accordance with the first charging current value to the first battery through the first charging path, and provide a second charging current in accordance with the second charging current value to the second battery through the second charging path.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
at least one processor (120; 301);
a first battery (189; 211; 309); and
a second battery (189; 215; 311);
wherein the at least one processor (120; 301) is configured to:
identify a first voltage of the first battery (189; 211; 309) and a second voltage of the second battery (189; 215; 311);
identify a first charging current value corresponding to a charging state of the first battery (189; 211; 309) based on the first voltage of the first battery (189; 211; 309);
identify a second charging current value corresponding to a charging state of the second battery (189; 215; 311) based on the second voltage of the second battery (189; 215; 311);
identify a total charging current value and a distribution ratio based on the first charging current value and the second charging current value;
set a first charging path for the first battery (189; 211; 309) and a second charging path for the second battery (189; 215; 311) to have the distribution ratio;
provide a first charging current in accordance with the first charging current value to the first battery (189; 211; 309) through the first charging path; and
provide a second charging current in accordance with the second charging current to with the second battery (189; 215; 311) through the second charging path.

2. The electronic device of claim 1,
wherein, to provide the first charging current to the first battery (189; 211; 309) through the first charging path and to provide the second charging current to the second battery (189; 215; 311) through the second charging path, the at least one processor (120; 301) is configured to:
generate a control signal for setting the total charging current value for charging the first battery (189; 211; 309) and the second battery (189; 215; 311) to a sum of the first charging current value and the second charging current value; and
transmit the control signal to a charger (102).

3. The electronic device of claims 1 to 2,
wherein the first charging path includes a first limiter (209; 305) for the first battery (189; 211; 309),
wherein the second charging path includes a second limiter (213; 307) for the second battery (189; 215; 311),
wherein the at least one processor (120; 301) is, to provide the first charging current in accordance with the first charging current value to the first battery (189; 211; 309), configured to control a current flowing through the first limiter (209; 305) to be the first charging current value, and
wherein the at least one processor (120; 301) is, to provide the second charging current in accordance with the second charging current value to the second battery (189; 215; 311), configured to control a current flowing through the second limiter (213; 307) to be the second charging current value.

4. The electronic device of claims 1 to 3,
wherein the at least one processor (120; 301) is, to identify the first charging current value corresponding to the charging state of the first battery (189; 211; 309) based on the first voltage of the first battery (189; 211; 309), configured to:
in a case that the first voltage of the first battery (189; 211; 309) is within a first range, set the first charging current value to a first designated value, and
in a case that the first voltage of the first battery (189; 211; 309) is within a second range, set the first charging current value to a second designated value,
wherein a maximum value of the first range is less than a minimum value of the second range, and
wherein the first designated value is greater than the second designated value,
wherein the at least one processor (120; 301) is, to identify the second charging current value corresponding to the charging state of the second battery (189; 215; 311) based on the second voltage of the second battery (189; 215; 311), configured to:
in a case that the second voltage of the second battery (189; 215; 311) is within a first range, set the second charging current value to a third designated value, and
in a case that the second voltage of the second battery (189; 215; 311) is within a second range, set the second charging current value to a fourth designated value,
wherein a maximum value of the first range is less than a minimum value of the second range, and
wherein the third designated value is greater than the fourth designated value,

5. The electronic device of claims 1 to 4,
wherein the first voltage of the first battery (189; 211; 309) is identified via the first limiter (209; 305) for the first battery (189; 211; 309), and
wherein the second voltage of the second battery (189; 215; 311) is identified via the second limiter (213; 307) for the second battery (189; 215; 311).

6. The electronic device of claims 1 to 5,
wherein the total charging current value is divided into the first charging current and the second charging current based on the distribution ratio.

7. The electronic device of claims 1 to 6,
wherein the distribution ratio is a ratio of the identified second charging current value to the identified first charging current value.

8. The electronic device of claims 1 to 7,
wherein, in a case that both the first voltage and the second voltage are within the first range, the ratio of the first designated value and the second designated value is a fixed value,
wherein, in a case that the first voltage and the second voltage are within the second range, the ratio of the first designated value and the second designated value is the fixed value, and
wherein the fixed value is a ratio of a capacity of the first battery (189; 211; 309) and a capacity of the second battery (189; 215; 311).

9. The electronic device of claims 1 to 8,
wherein the at least one processor (120; 301) is further configured to:
when the first voltage or the second voltage approaches a reference value,
change a charging scheme from a first charging scheme to a second charging scheme,
in the second charging scheme, reduce the first charging current for charging the first battery (189; 211; 309) to maintain the first voltage at the reference value, and
in the second charging scheme, reduce the second charging current for charging the second battery (189; 215; 311) to maintain the second voltage at the reference value.

10. The electronic device of claims 1 to 9,
wherein the first charging scheme performs charging with a first power,
wherein the second charging scheme performs charging with a second power, and
wherein the first power is greater than the second power.

11. A method performed by an electronic device (101), the method comprising:
identifying a first voltage of a first battery (189; 211; 309) and a second voltage of a second battery (189; 215; 311);
identifying a first charging current value corresponding to a charging state of the first battery (189; 211; 309) based on the first voltage of the first battery (189; 211; 309);
identifying a second charging current value corresponding to a charging state of the second battery (189; 215; 311) based on the second voltage of the second battery (189; 215; 311);
identifying a total charging current value and a distribution ratio based on the first charging current value and the second charging current value;
setting a first charging path for the first battery (189; 211; 309) and a second charging path for the second battery (189; 215; 311) to have the distribution ratio;
providing a first charging current in accordance with the first charging current value to the first battery (189; 211; 309) through the first charging path; and
providing a second charging current in accordance with the second charging current value to the second battery (189; 215; 311) through the second charging path.

12. The method of claim 11,
wherein the providing the first charging current to the first battery (189; 211; 309) through the first charging path and the providing the second charging current to the second battery (189; 215; 311) through the second charging path, comprise:
generating a control signal for setting the total charging current value for charging the first battery (189; 211; 309) and the second battery (189; 215; 311) to a sum of the first charging current value and the second charging current value; and
transmitting the control signal to a charger (102).

13. The method of claims 11 to 12,
wherein the first charging path includes a first limiter (209; 305) for the first battery (189; 211; 309),
wherein the second charging path includes a second limiter (213; 307) for the second battery (189; 215; 311),
wherein the providing the first charging current in accordance with the first charging current value to the first battery (189; 211; 309) comprises controlling a current flowing through the first limiter (209; 305) to be the first charging current value, and
wherein the providing the second charging current in accordance with the second charging current value to the second battery (189; 215; 311) comprises controlling a current flowing through the second limiter (213; 307) to be the second charging current value.

14. The method of claims 11 to 13,
wherein the identifying the first charging current value corresponding to the charging state of the first battery (189; 211; 309) based on the first voltage of the first battery (189; 211; 309) comprises:
in a case that the first voltage of the first battery (189; 211; 309) is within a first range, setting the first charging current value to a first designated value, and
in a case that the first voltage of the first battery (189; 211; 309) is within a second range, setting the first charging current value to a second designated value,
wherein a maximum value of the first range is less than a minimum value of the second range, and
wherein the first designated value is greater than the second designated value,
wherein the identifying the second charging current value corresponding to the charging state of the second battery (189; 215; 311) based on the second voltage of the second battery (189; 215; 311) comprises:
in a case that the second voltage of the second battery (189; 215; 311) is within a first range, setting the second charging current value to a third designated value, and
in a case that the second voltage of the second battery (189; 215; 311) is within a second range, setting the second charging current value to a fourth designated value,
wherein a maximum value of the first range is less than a minimum value of the second range, and
wherein the third designated value is greater than the fourth designated value,

15. The method of claims 11 to 14,
wherein the first voltage of the first battery (189; 211; 309) is identified via the first limiter (209; 305) for the first battery (189; 211; 309), and
wherein the second voltage of the second battery (189; 215; 311) is identified via the second limiter (213; 307) for the second battery (189; 215; 311).
